# EUROPEAN PATENT APPLICATION

(11) **EP 2 637 136 A1**
(43) Date of publication of application: **11.09.2013**
(21) Application number: 13001068.9
(22) Date of filing: 04.03.2013
(51) Int. Cl.: G06Q 30/06

(54) **A lottery syndicate system**

(30) Priority: 05.03.2012 AU 2012900854; 21.02.2013 AU 2013200989
(71) Applicant: TMS Global Services Pty Ltd, QLD 4066 Toowong (AU)
(72) Inventor: Veverka, Mike, Mount Ommaney, QLD 4074 (AU); Board, Brad, Kenmore, QLD 4069 (AU)
(74) Representative: Zeuner Summerer Stütz

(57) **Abstract**

The present invention relates to an online lottery syndicate system. The system includes a lottery server for issuing lottery tickets associated with a lottery. A syndicate manager computer enables a syndicate manager to arrange purchase of a lottery syndicate ticket in the lottery. An agent server receives confirmation of payment by the lottery syndicate manager, receives lottery syndicate conditions selected by the lottery syndicate manager, and purchases the lottery syndicate ticket upon receipt of said payment and based upon said lottery syndicate conditions.

## Description

The present invention generaiiy relates to a lottery syndicate system.

The reference to any prior art in this specification is not, and should not be taken as an acknowledgement or any form of suggestion that the prior art forms part of the common general knowledge.

Lottery is a form of gaming which involves the drawing of numbers for a prize pool.

It is known that some people get together and play a syndicate (also known as a group play) in a lottery draw by combining money to purchase an increased number of tickets for a lottery draw, thereby increasing the possibility of winning.

However, coordinating the syndicate can be complicated, particularly when syndicate members are located far apart including in countries in which lottery play is not provided. It is not unusual for syndicate members to be tardy in paying which can cause complications, particularly in the event of a win. Further, some people are desirous of joining a syndicate to experience the joy of community play, although do not know others who regularly participate in lotteries.

The Applicant has identified a need for improved management of syndicate lottery play.

According to an aspect of the present invention, there is provided an online lottery syndicate system including:
a lottery server for issuing lottery tickets associated with a lottery;
a syndicate manager computer for enabling a syndicate manager to arrange purchase of a lottery syndicate ticket in the lottery; and
an agent server for receiving confirmation of payment by the lottery syndicate manager, receiving lottery syndicate conditions selected by the lottery syndicate manager, and purchasing the lottery syndicate ticket upon receipt of said confirmation of payment and based upon said lottery syndicate conditions.

Advantageously, the online agent server facilitates coordination of the syndicate, which is particularly simplified when syndicate members are located far apart including in countries in which lottery play is not provided.

The system may further include a social networking server for inviting prospective members to join the syndicate by purchasing shares in the ticket. The prospective members may be connections of the syndicate manager. Accordingly, connections may join the syndicate to experience the joy of community play, irrespective of whether or not they actually know the syndicate manager or know that the syndicate manager regularly participates in lotteries.

The system may further include one or more prospective syndicate member computers for enabling payment to join the syndicate. The syndicate members may readily pay to become a member of the syndicate without the need to pay the syndicate manager and to avoid any membership dispute arising in the event of a win.

The system may further include a financial server for administering financial accounts for syndicate members and receiving payments.

According to another aspect of the present invention, there is provided an agent server configured to:
receive confirmation of payment by a lottery syndicate manager;
receive lottery syndicate conditions selected by the lottery syndicate manager; and
purchase a lottery syndicate ticket upon receipt of said confirmation of payment and based upon said lottery syndicate conditions.

According to another aspect of the present invention, there is provided a method for managing a lottery syndicate, the method involving the steps of:
an agent server receiving confirmation of payment by a lottery syndicate manager;
the agent server receiving lottery syndicate conditions selected by the lottery syndicate manager; and
the agent server purchasing a lottery syndicate ticket upon receipt of said confirmation of payment and based upon said lottery syndicate conditions.

During purchasing, the agent server may allocate shares in the ticket. The agent server may allocate shares to syndicate member's accounts upon receipt of payment from syndicate members. The shares may be unequal.

Prior to a predetermined cancellation period before a lottery draw, the agent server may confirm to the syndicate manager that all shares in the syndicate are sold. The agent server may electronically transfer any winnings from the lottery draw into the syndicate members accounts based upon their allocation of shares. The agent server may validate the age or identity of each syndicate member before they can withdraw winnings from their account.

Prior to a predetermined cancellation period before a lottery draw associated with the syndicate ticket and subsequent to the agent server confirming to the syndicate manager that all shares in the syndicate ticket are not sold, the agent server may receive a cancellation request of the syndicate ticket from the syndicate manager.

The agent server may enable the syndicate manager to send one or more invitations to prospective members of a lottery syndicate associated with the purchased lottery syndicate ticket. The invitations may be sent to connections of the syndicate manager via social media using a social networking server. The invitations may be either broadcast to all connections or sent to selected connections. Prior to a predetermined cancellation period before a lottery draw associated with the syndicate ticket and subsequent to the agent server confirming to the syndicate manager that all shares in the syndicate ticket are not sold, the method may further include the step of the agent server sending public invitations via social media to join the syndicate, preferably by purchasing shares in the ticket.

The agent server may cancel the syndicate ticket purchase and issue electronic refunds to the accounts of the syndicate members including the syndicate manager. The agent server may electronically transfer any winnings from a lottery draw associated with the syndicate ticket into syndicate members accounts based upon an allocation of syndicate shares. The agent server may validate the age or identity of each syndicate member before they can withdraw winnings from their account. The method may further include the step of the agent server registering a lottery syndicate manager or other syndicate members.

According to another aspect of the present invention, there is provided a social networking lottery method including the step of:
sending, using a social networking server, an invitation to a prospective member of a lottery syndicate.

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:

Figure 1 is a schematic diagram of a social networking system in accordance with an embodiment of the present invention;

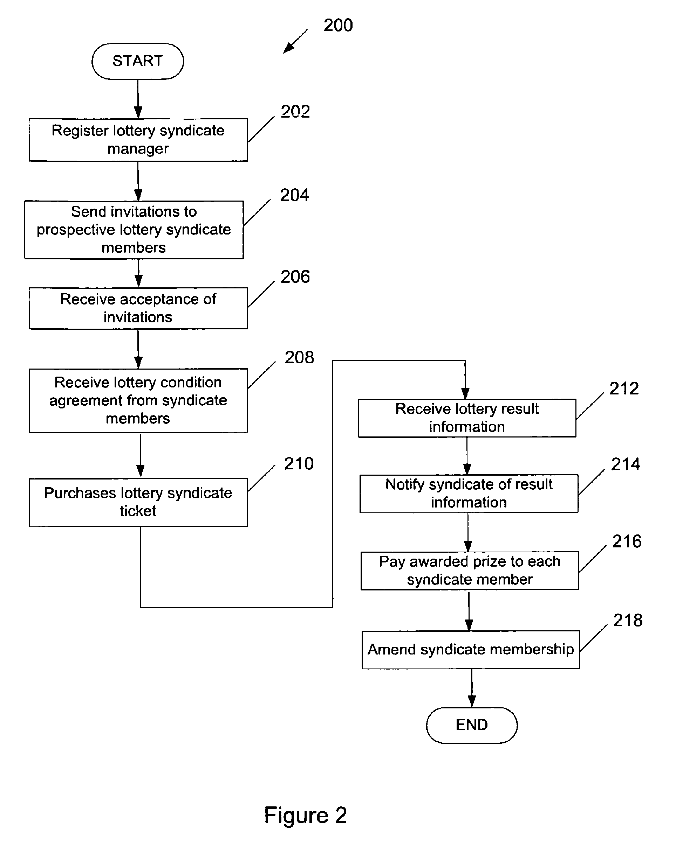

Figure 2 is a flowchart showing a social networking lottery method performed using the system of Figure 1; and

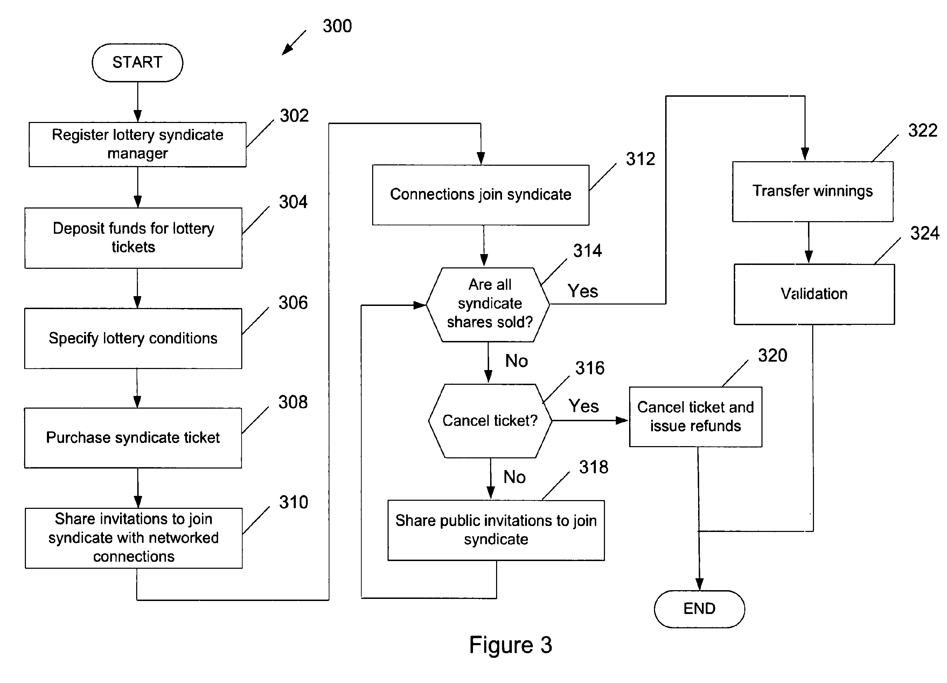

Figure 3 is a flowchart showing a syndicate lottery method performed using the system of Figure 1.

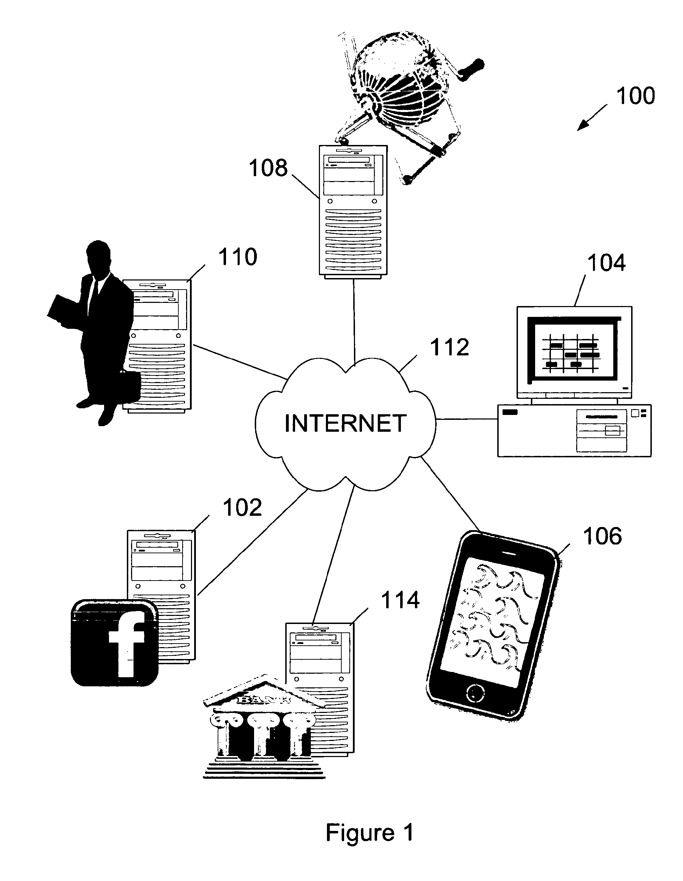

According to an embodiment of the present invention, there is provided a social networking system 100 as shown in Figure 1.

The social networking system 100 includes a social networking administrator server 102 for administering a social networking website (e.g. Facebook, Myspace, etc). A registered member of the website has a personal profile, and can be a designated syndicate manager to manage a lottery syndicate using computer 104. The syndicate manager can connect to other website syndicate members with computers 106 so as to manage syndicate lottery play using the website as described in detail below.

The system 100 also includes a lottery server 108 administered by a lottery provider (e.g. Tattersalls, South Australian Lotteries, Western Australian Lotteries, etc.) conducting a lottery and for issuing associated lottery tickets. The system 100 further includes an agent server 110 interfaced to the lottery server 108 via the Internet 112. The agent server 110 is configured to sell tickets for the lottery online to the syndicate manager, and to manage underlying lottery syndicate operations when communicating with the social networking website. A bank server 114 stores financial accounts for all of the syndicate members and other entities, and assists with all payments.

The social networking website enables the syndicate manager to send, with computer 104, one or more joining invitations to computers 106 of prospective members of a lottery syndicate. The syndicate manager receives acceptance of the invitations to form the syndicate and receives agreement from syndicate members of one or more conditions relating to playing of the lottery. A detailed description of the social networking lottery method is provided below.

A social networking lottery method 200 performed using the system 100 is now described in detail below.

At step 202, the agent server 110 connected to social networking server 102 registers a lottery syndicate manager. Elaborating further, a social networking website user operating computer 104, registers as a lottery syndicate manager and creates an associated account in a database of the agent server 110using the agent's website.

At step 204, the agent server 110 connected to social networking server 102 at the request of the syndicate manager sends one or more invitations to prospective members of a lottery syndicate. Elaborating further, the syndicate manager operating computer 104 sends invitations using the social networking website to connections (e.g. friends who are prospective members of the lottery syndicate) via their computers 106.

At step 206, the agent server 110 connected to social networking server 102 at the request of the syndicate manager receives acceptance of the invitations to form the lottery syndicate. Elaborating further, the connections operating computers 106 each accept the invitations using the social networking website.

At step 208, the agent server 110 connected to social networking server 102 receives agreement from syndicate members of one or more conditions relating to playing of a lottery. Elaborating further, the syndicate manager outlines the lottery conditions to the syndicate members who agree once consensus of the conditions is reached. The conditions relate to the identification of a lottery draw, type of lottery game, selection of numbers (e.g. random or manual number selection), number of draws to enter the same selection of numbers, or division of winnings among syndicate members (which need not be equal). Confirmation of the agreement is in the form of each syndicate member electronically depositing money in the bank account of the syndicate manager using the website.

At step 210, the agent server 110 connected to social networking server 102 purchases online at least one ticket for the lottery in accordance with the agreed conditions. The syndicate manager typically manually purchases the ticket from an agent server website administered by the agent server 110 (or from the lottery server 108 direct), although the agent server 110 may automatically purchase the ticket upon receipt of agreement. The ticket details are saved to the account in the database in agent server 110.

At step 212, the agent server 110 connected to social networking server 102 receives result information relating to the lottery. The result information includes drawn numbers for the lottery and awarded prizes. Elaborating further, the social networking website and agent website receives and displays the result information from the agent server 110 (or lottery server 108).

At step 214, the agent server 110 connected to social networking server 102 notifies the syndicate manager and other syndicate members of the result information (irrespective of a win). The agent server 110 can also accesses ticket information stored in a database to identify the winning syndicate ticket based on the received result information.

At step 216, the agent server 110 electronically pays an awarded prize to each syndicate member including the syndicate manager according to the portion they are due. Elaborating further, the prize is automatically paid to member accounts.

At step 218, the agent server 110 connected to social networking server 102 amends the syndicate membership. Elaborating further, an existing syndicate member may send a removal request or the syndicate manager may invite others to join the syndicate.

Another syndicate lottery method 300 performed using the system 100 is now described in detail beiow.

At step 302, the agent server 110 registers a lottery syndicate manager. Elaborating further, a social networking website user operating computer 104, registers as a lottery syndicate manager and creates an associated manager account in a database of the agent server 110. The manager operating computer 104 uses an agent's website hosted by the agent server 110 to register the manager account.

At step 304, the agent server 110 receives from the bank server 114, confirmation of a deposit of funds for purchasing lottery tickets from the lottery syndicate manager. The manager operating computer 104 uses an agent's website hosted by the agent server 110 to electronically transfer the funds now associated with the manager account.

At step 306, the agent server 110 receives confirmation of lottery syndicate conditions selected by the lottery syndicate manager operating computer 104. The conditions relate to the identification of a lottery draw, type of lottery game, selection of numbers (e.g. random or manual number selection), number of draws to enter the same selection of numbers, or division of winnings among syndicate members (which need not be equal).

At step 308, the agent server 110 connected to lottery server 108 automatically purchases a lottery syndicate ticket in accordance with the manager specified conditions at step 306 and using the deposited funds at step 304. The ticket purchase details are saved in the manager account and the server 110 allocates a desired number of syndicate shares in the ticket (e.g. one share per syndicate member).

At step 310, and only after the syndicate ticket purchase with funds in credit at step 308, the agent server 110 connected to social networking server 102 enables the syndicate manager to share one or more invitations to prospective members of a lottery syndicate associated with the purchased syndicate ticket. Elaborating further, the syndicate manager operating computer 104 sends invitations using the social networking website to connections (e.g. friends who are prospective members of the lottery syndicate) via their computers 106. The invitations are either sent as a general broadcast to all connections or to individual connections selected by the syndicate manager.

At step 312, the agent server 110 connected to social networking server 102 receives and stores in the manager account, confirmation of connections joining the syndicate. The agent server 110 allocates syndicate ticket shares to the connections, typically one share per connection. Each connection also has an agent server account managed by bank server 114. Shares are only allocated by the agent server 110, so that the connection effectively joins the ticket syndicate, once the commensurate funds are transferred to the account and the agent server 110 is notified accordingly.

At query step 314, prior to a predetermined cancellation period (e.g. one hour) before the lottery draw, the agent server 110 confirms to the syndicate manager operating computer 104 (using either the social networking or agent website) whether or not all shares in the syndicate are sold.

If the syndicate ticket shares are all sold, the lottery draw is awaited and method 300 proceeds to step 322 below. Otherwise, the method 300 proceeds to step 316.

At query step 316, the agent server 110 receives confirmation from the syndicate manager operating computer 104 whether the syndicate ticket purchase should be cancelled for want of joined syndicate members, whereby shares in the syndicate ticket still remain un-purchased.

If shares have previously been offered for sale to the public at step 318 and the syndicate manager operating computer 104 declines purchase of the remaining syndicate shares, the agent server 110 receives confirmation from the syndicate manager operating computer 104 that the ticket purchase is to be cancelled at step 320 below.

Alternatively, the agent server 110 receives confirmation from the syndicate manager operating computer 104 to send a public invitation, via a public broadcast, on the social networking website to buy the remaining shares in the syndicate ticket at step 318.

At step 318, the agent server 110 connected to social networking server 102 sends a public invitation to interested users of the social networking website to purchase any remaining shares in the lottery syndicate.

At step 320, the agent server 110 receives confirmation from the syndicate manager operating computer 104 to cancel the syndicate ticket purchase. The agent server 110 thereby issues electronic refunds to the accounts of each of the syndicate members including the syndicate manager.

At step 322, the agent server 110 electronically transfers any winnings from the lottery draw associated with the syndicate ticket into the syndicate members accounts based upon their allocation of syndicate shares.

At step 324, the agent server 110 validates the age and identity of each syndicate member before they can withdraw the winnings from their account.

A person skilled in the art will appreciate that many embodiments and variations can be made without departing from the ambit of the present invention.

For example, agreement from syndicate members of one or more conditions relating to playing of a lottery (as per step 208 above) may be performed prior to or concurrently with the step of receiving acceptance of the invitations to form the lottery syndicate (as per step 206 above).

At step 210 above, the syndicate lottery ticket was purchased online. Alternatively, the method 200 may include the step of generating and printing a form including the agreed syndicate conditions to be used by the syndicate manager in manually purchasing the syndicate lottery ticket. In one embodiment, the form may be electronically read by a scanner when purchasing the ticket.

In one embodiment, the syndicate lottery steps may be performed by (and integrated into) the social networking server 102.

The social networking server 102 would typically be a Facebook or MySpace server. In other embodiments, the server may be a Twitter or e-mail server.

In one embodiment, prior to step 314, the agent server 110 electronically reminds the syndicate manager of the impending lottery draw deadline.

The confirmation of payment may be the payment itself (i.e. funds appearing in an account), or approval of an electronic funds transfer (EFT).

In compliance with the statute, the invention has been described in language more or less specific to structural or methodical features. It is to be understood that the invention is not limited to specific features shown or described since the means herein described comprises preferred forms of putting the invention into effect.

## Claims

1. An online lottery syndicate system including:
a lottery server for issuing lottery tickets associated with a lottery;
a syndicate manager computer for enabling a syndicate manager to arrange purchase of a lottery syndicate ticket in the lottery; and
an agent server for receiving confirmation of payment by the lottery syndicate manager, receiving lottery syndicate conditions selected by the lottery syndicate manager, and purchasing the lottery syndicate ticket upon receipt of said confirmation of payment and based upon said lottery syndicate conditions.

2. A system as claimed in claim 1, further including a social networking server to facilitate inviting prospective members to purchase shares in the syndicate ticket.

3. A system as claimed in claim 2, wherein the prospective members are connections of the syndicate manager.

4. A system as claimed in claim 1, further including one or more prospective syndicate member computers for enabling payment to purchase shares in the syndicate ticket.

5. A system as claimed in claim 1, further including at least one financial server for administering financial accounts for syndicate members and for receiving payments.

6. An agent server configured to:
receive confirmation of payment by a lottery syndicate manager;
receive lottery syndicate conditions selected by the lottery syndicate manager; and
purchase a lottery syndicate ticket upon receipt of said confirmation of payment and based upon said lottery syndicate conditions.

7. A method for managing a lottery syndicate, the method involving the steps of:
an agent server receiving confirmation of payment by a lottery syndicate manager;
the agent server receiving lottery syndicate conditions selected by the lottery syndicate manager; and
the agent server purchasing a lottery syndicate ticket upon receipt of said confirmation of payment and based upon said lottery syndicate conditions.

8. A method as claimed in claim 7, wherein during purchasing, the agent server allocates shares in the ticket.

9. A method as claimed in claim 8, wherein the agent server allocates shares, whether equal or otherwise, to syndicate members' accounts upon receipt of payment from syndicate members.

10. A method as claimed in claim 7, wherein prior to a predetermined cancellation period before a lottery draw associated with the syndicate ticket, the agent server confirms to the syndicate manager that all shares in the syndicate are sold.

11. A method as claimed in claim 7, wherein the agent server electronically transfers any winnings associated with the ticket into syndicate members' accounts based upon share allocation.

12. A method as claimed in claim 7, wherein the agent server validates the age or identity syndicate members before they can withdraw winnings from associated accounts.

13. A method as claimed in claim 7, wherein prior to a predetermined cancellation period before a lottery draw associated with the syndicate ticket and subsequent to the agent server confirming to the syndicate manager that all shares in the syndicate ticket are not sold, the agent server receives a cancellation request of the syndicate ticket from the syndicate manager.

14. A method as claimed in claim 7, wherein the syndicate manager sends one or more invitations to prospective members of a lottery syndicate associated with the purchased lottery syndicate ticket.

15. A method as claimed in claim 14, wherein the invitations are sent to connections of the syndicate manager via social media.
